# FASCICULE DE BREVET EUROPEEN

(11) **EP 0 893 714 B1**
(45) Date de publication et mention de la délivrance du brevet: **15.06.2005**
(21) Numéro de dépôt: 98401877.0
(22) Date de dépôt: 23.07.1998
(51) Int. Cl.: G02B 6/16

(54) **Fibre optique multicoeurs**
Mehrkernfaser
Multicore optical fibre

(30) Priorité: 24.07.1997 FR 9709418
(43) Date de publication de la demande: 27.01.1999
(73) Titulaire: Draka Comteq B.V., 1018 TX Amsterdam (NL)
(72) Inventeur: Tardy, André, 91520 Egly (FR); Nouchi, Pascale, 78600 Maisons Laffitte (FR); Meilleur, Rosine, 78180 Montigny le Bretonneux (FR)
(74) Mandataire: Blokland, Arie

(56) Documents cités:
- EP-A- 0 695 003
- US-A- 4 436 368
- PATENT ABSTRACTS OF JAPAN vol. 011, no. 087 (P-557), 17 mars 1987 & JP 61 241705 A (SUMITOMO ELECTRIC IND LTD), 28 octobre 1986
- PATENT ABSTRACTS OF JAPAN vol. 005, no. 056 (P-057), 17 avril 1981 & JP 56 009707 A (SUMITOMO ELECTRIC IND LTD), 31 janvier 1981
- PATENT ABSTRACTS OF JAPAN vol. 097, no. 005, 30 mai 1997 & JP 09 005539 A (HITACHI CABLE LTD;SHIN ETSU CHEM CO LTD), 10 janvier 1997
- PATENT ABSTRACTS OF JAPAN vol. 005, no. 001 (P-043), 8 janvier 1981 & JP 55 133003 A (FURUKAWA ELECTRIC CO LTD:THE), 16 octobre 1980

## Description

L'invention concerne une fibre optique multicoeurs comprenant des coeurs noyés dans une gaine optique et qui contiennent tous un élément de dopage.

Un exemple connu d'une telle fibre optique comprend une gaine optique en silice SiO₂ et des coeurs contenant une quantité d'oxyde de germanium GeO₂. Cet élément de dopage confère aux coeurs un indice de réfraction différent d'un indice de réfraction propre à la gaine optique. De cette façon, chaque coeur agit en guide d'onde lumineuse si bien que la capacité de transmission d'information de la fibre optique multicoeurs est multipliée par le nombre de coeurs qu'elle comprend. Les coeurs ont en général une disposition symétrique autour d'une génératrice axiale de la fibre optique multicoeurs.

Le raccordement des fibres optiques multicoeurs est plus délicat que celui des fibres monocoeurs. En effet, il est nécessaire de repérer individuellement les coeurs dans un plan de raccordement perpendiculaire à la fibre optique, afin de prévenir tout risque d'interconnexion erronée. La disposition symétrique des coeurs n'est pas suffisante pour les repérer individuellement.

Une solution consiste à marquer la fibre optique multicoeurs lors de sa fabrication. Un revêtement en matériau plastique est déposé autour de la fibre optique puis est marqué d'une rainure colorée par une encre. Ce type de marquage requiert une précision élevée compte tenu du diamètre de la fibre optique multicoeurs et entraîne un risque de dégradation de la résistance mécanique de la fibre optique. Le procédé de fabrication doit aussi compter une étape dédiée au repérage.

Selon une solution connue du document FR-2 736 441 A1, la fibre optique multicoeurs est entourée d'une bague dont les bords extérieurs dessinent de façon homothétique le bord de la fibre optique. Une marque colorée est déposée sur l'un des bords extérieurs de la bague pour le repérage. Il faut remarquer que cette solution ne semble pas applicable aux fibres optiques multicoeurs de section circulaire. Là encore, une étape du procédé de fabrication doit être dédiée au repérage.

Une autre solution consiste à assigner à l'un des coeurs de la fibre optique un rôle de repère, en lui conférant une propriété optogéométrique différente de celle des autres coeurs.

Un exemple d'une telle solution est donné par une fibre optique multicoeurs dans laquelle l'élément dopant est absent d'un des coeurs. Une observation sous microscope d'un plan de raccordement permet de distinguer tous les coeurs à l'exception du coeur non dopé, l'élément dopant étant à l'origine d'un contraste entre les coeurs et la gaine optique qui résulte de la différence entre les indices de réfraction. La disposition symétrique des coeurs dans le plan de raccordement est ainsi rompue par le coeur non dopé qui fournit un repère local. Cependant, ce coeur ne participe plus à la transmission d'information et diminue la capacité de la fibre optique.

Selon un autre exemple de solution, l'élément dopant est réparti, pour l'un des coeurs, dans une section nettement plus petite ou plus grande que la section des autres coeurs de la fibre optique pour fournir un repère local. Cependant la différence de diamètre des sections est telle que le coeur de section nettement plus petite ou plus grande n'est pas utilisé pour la transmission d'information, d'où il résulte là encore une diminution de la capacité de la fibre optique multicoeurs.

Le but de l'invention est de fournir une fibre optique multicoeurs pour laquelle un repérage individuel des coeurs dans un plan quelconque de raccordement ne diminue pas la capacité de transmission et est simple à mettre en oeuvre.

A cet effet, l'invention a pour objet une fibre optique multicoeurs comme définie dans la revendication 1.

Lors d'une observation d'un plan de raccordement, les coeurs autres que le coeur singulier forment par contraste avec la gaine optique, une tache par exemple sombre, alors que le coeur singulier présente une zone intérieure claire entourée par une zone sombre. D'où il résulte que le coeur singulier est utilisé comme repère local du plan de raccordement pour repérer individuellement les coeurs de la fibre optique.

L'élément dopant est réparti uniformément dans le coeur singulier et dans chacun des autres coeurs pour créer un profil d'indice de réfraction de type anneau dans le coeur singulier et de type échelon dans les autres coeurs. La quantité d'élément de dopage différente pour le coeur singulier et pour les autres - coeurs confère au profil anneau du coeur singulier et au profil échelon des autres coeurs un mode d'extension spatiale de l'énergie lumineuse sensiblement du même ordre, ou encore un diamètre de mode sensiblement égal. De cette façon, le coeur singulier est utilisé de la même manière que les autres coeurs pour transmettre l'information de la fibre optique multicoeurs.

Selon la fibre optique multicoeurs de l'invention, le coeur singulier sert donc à la fois de repère local du plan de raccordement et de guide d'onde.

D'autres caractéristiques et avantages de l'invention apparaîtront à la lecture de la description illustrée par les dessins.
La figure 1 montre en coupe transversale une fibre optique multicoeurs selon l'invention comprenant quatre coeurs.
Les figures 2a et 3a montrent respectivement en coupe transversale un coeur non singulier et un coeur singulier selon un premier mode de réalisation de l'invention.
Les figures 2b et 3b montrent respectivement un profil d'indice de réfraction de type échelon et un profil d'indice de type anneau selon un premier mode de réalisation de l'invention.
Les figures 4a et 5a montrent respectivement en coupe transversale un coeur non singulier et un coeur singulier selon un deuxième mode de réalisation de l'invention.
Les figures 4b et 5b montrent respectivement un profil d'indice de réfraction de type échelon et un profil d'indice de type anneau avec échelon selon un deuxième mode de réalisation de l'invention.

Une fibre optique multicoeurs selon l'invention comprend une gaine optique et des coeurs qui contiennent tous un élément de dopage. Il est prévu un nombre de coeurs au moins égal à deux.

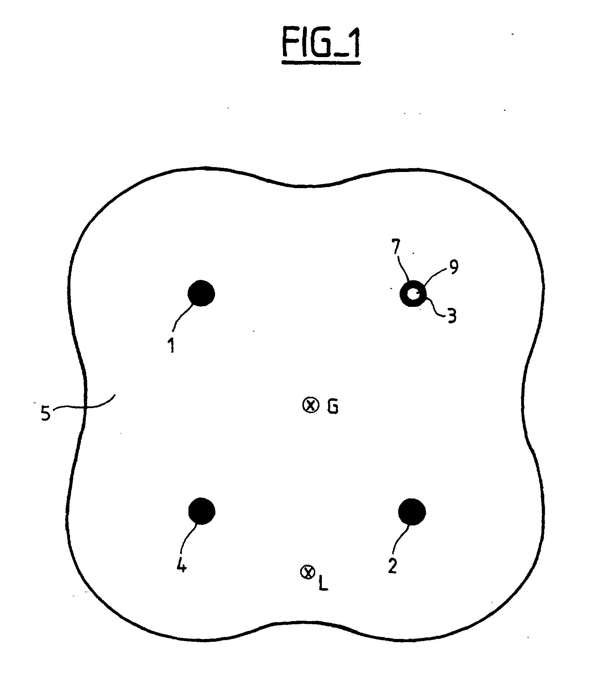

A la figure 1 sont représentés une gaine optique 5 et quatre coeurs 1 à 4 dans un plan de coupe perpendiculaire à une direction longitudinale L de la fibre optique. Les coeurs s'étendent parallèlement à la direction longitudinale L. Ils ont une section circulaire et sont disposés de façon symétrique par rapport à une génératrice axiale G de la fibre optique. La fibre optique multicoeurs possède une section grossièrement circulaire avec un diamètre moyen égal à 140 µm. La petite distance entre deux coeurs est égale à 52 µm.

La gaine optique est constituée de silice SiO₂. Les coeurs contiennent de l'oxyde de germanium GeO₂ comme élément de dopage de la silice pour créer une différence d'indice de réfraction avec la gaine optique.

L'un des coeurs 3, dit coeur singulier, possède une zone intérieure centrale 9 non dopée par l'élément de dopage, qui est par exemple constituée d'un matériau identique à celui de la gaine optique 5. L'élément de dopage est réparti, pour le coeur singulier 3, dans une zone tubulaire 7 entourant la zone intérieure centrale 9.

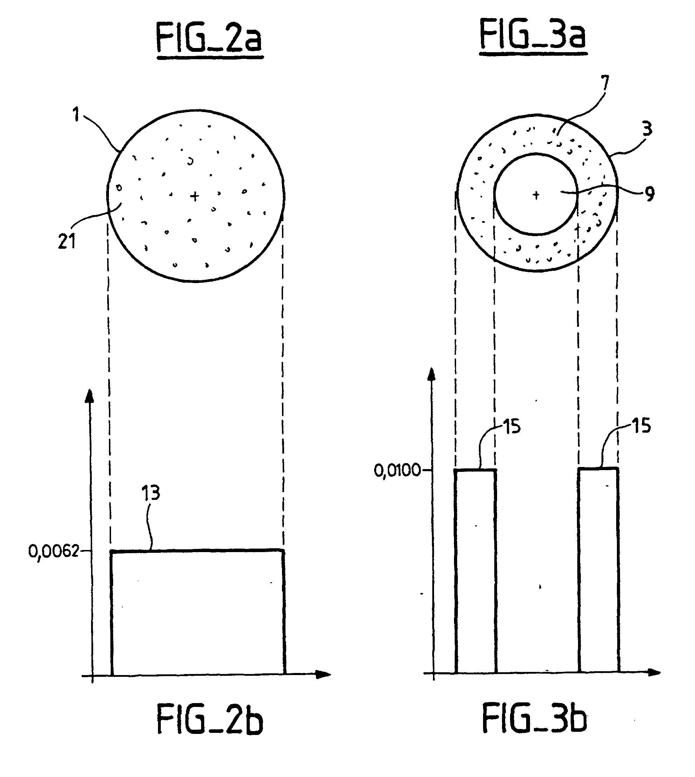

Pour les coeurs 1, 2 et 4, l'élément de dopage est réparti dans tout le coeur. La répartition de l'élément de dopage est symbolisée par des points qui couvrent, figure 2a, une section pleine du coeur 1, et figure 3a, la zone tubulaire 7 du coeur singulier 3.

L'observation d'un plan de raccordement perpendiculaire à la direction longitudinale de la fibre optique multicoeurs est réalisé par couplage de lumière à l'intérieur de la fibre optique par exemple en éclairant transversalement la gaine optique recouverte localement d'une matière diffusante et en visualisant sous un microscope une zone annulaire par exemple sombre correspondant à la zone tubulaire 7, avec une zone centrale claire correspondant à la zone intérieure centrale 9, et trois taches pleines sombres correspondant respectivement au coeur singulier 3 et aux coeurs 1, 2 et 4.

De préférence, l'élément dopant est réparti uniformément dans la zone tubulaire 7 du coeur singulier 3 et dans les coeurs 1, 2 et 4. Il en résulte, figures 2b et 3b, un profil d'indice de réfraction, respectivement de type échelon 13 pour l'un quelconque des coeurs non singuliers 1, 2 et 4, par exemple le coeur 1, et de type anneau 15 pour le coeur singulier 3.

La quantité d'élément de dopage différente pour le coeur singulier et pour les autres coeurs confère au profil anneau du coeur singulier et au profil échelon des autres coeurs un mode d'extension spatiale de l'énergie lumineuse sensiblement du même ordre, ou encore un diamètre de mode sensiblement égal.

A titre d'exemple, l'oxyde de germanium est introduit uniformément à hauteur de 9% ± 0,5% dans la silice pour conférer au coeur singulier 3 un écart d'indice de réfraction par rapport à la gaine optique de 0,01 et constant dans la zone tubulaire 7 de diamètre externe égal à 6,5 µm et de diamètre interne égal à 3,25 µm. Les autres coeurs 1, 2 et 4 contiennent uniformément entre 5,5% et 6% d'élément de dopage qui leur confère un écart d'indice de réfraction de 0,0062 constant dans leur section de diamètre égal à 7,35 µm. Le diamètre de mode est compris entre 8 µm et 8,5 µm pour les quatre coeurs, qui sont utilisés à égalité pour la transmission de l'information par la fibre optique multicoeurs. Ainsi le coeur singulier permet à la fois de repérer individuellement les autres coeurs de la fibre optique et de transmettre l'information en tant que guide d'onde.

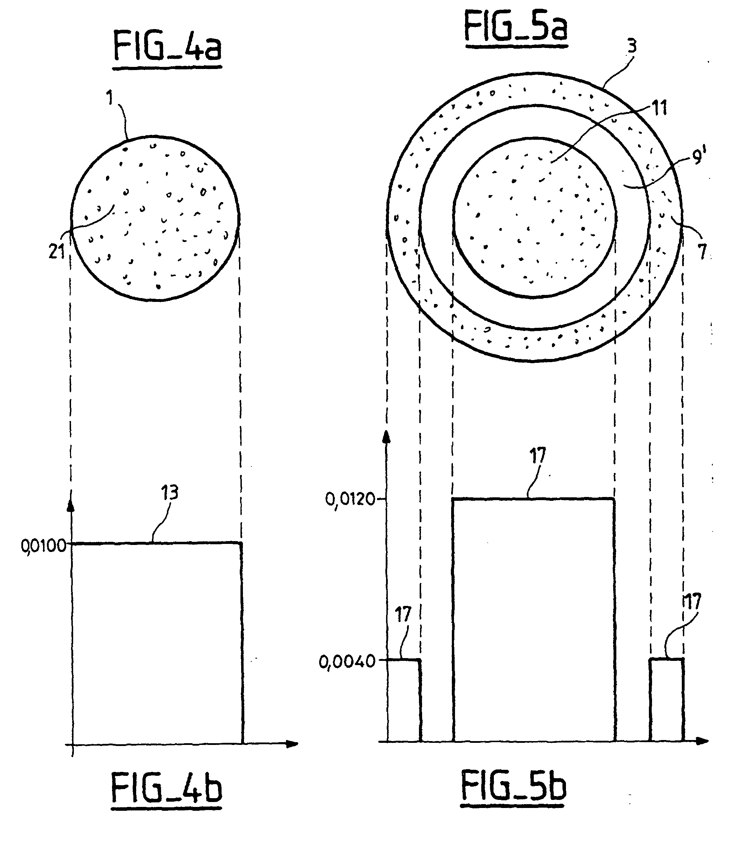

Selon un autre mode de réalisation de l'invention, le coeur singulier 3, figure 5a, comporte une zone centrale 11 entièrement dopée par l'élément de dopage à l'intérieur d'une zone intérieure tubulaire 9' non dopée par l'élément de dopage, elle-même entourée par la zone tubulaire 7 entièrement dopée par l'élément de dopage. Pour les autres coeurs 1, 2 et 4, par exemple le coeur 1, figure 4a, l'élément de dopage est réparti dans tout le coeur.

L'observation d'un plan de raccordement perpendiculaire à la direction longitudinale L de la fibre optique multicoeurs est réalisé de la même façon que décrite précédemment en visualisant sous un microscope d'une part le coeur singulier 3 par une zone sombre annulaire, correspondant à la zone tubulaire 7, entourant une zone annulaire claire, correspondant à la zone intérieure tubulaire 9', qui entoure elle-même une tache pleine sombre correspondant à la zone centrale 11, et d'autre part des taches pleines sombres qui correspondent aux coeurs 1, 2 et 4.

De préférence, l'élément dopant est là encore réparti uniformément dans la zone tubulaire 7 et le coeur 11 du coeur singulier 3 et dans les autres coeurs 1, 2 et 4. Il en résulte, figures 4b et 5b, un profil d'indice de réfraction, respectivement de type anneau avec échelon 17 pour le coeur singulier 3, et de type échelon 13 pour l'un quelconque des autres coeurs, par exemple le coeur 1.

La conservation du diamètre de mode entre le coeur singulier et les autres coeurs est obtenue par une quantité différente en élément de dopage. Là encore à titre d'exemple, l'oxyde de germanium est introduit uniformément dans la zone tubulaire 7 du coeur singulier 3 à hauteur de 3,5% à 4% par rapport à la silice pour conférer à cette dernière un écart constant d'indice de réfraction par rapport à la gaine optique de 0,004 ; la zone tubulaire 7 a un diamètre externe égal à 15 µm et un diamètre interne égal à 11 µm. L'oxyde de germanium est introduit à hauteur de 11% ± 0,5% pour conférer à la zone centrale 11 un écart d'indice de réfraction de 0,012 et constant dans cette dernière de diamètre égal à 7 µm. Les autres coeurs 1, 2 et 4 contiennent uniformément entre 9% et 9,5% d'élément de dopage qui leur confère un écart d'indice de réfraction de 0,0100 constant dans leur section de diamètre égal à 7,2 µm.

Le diamètre de mode est ainsi compris entre 8 µm et 8,5 µm,

La fibre optique multicoeurs de l'invention est fabriquée à partir de plusieurs préformes de fibres optiques monocoeur, qui sont disposées de façon symétrique autour d'une baguette centrale en silice et assemblées par soudage sur tout ou partie de lignes de tangence lors d'une opération de fibrage. Pour obtenir une fibre optique multicoeurs homogène, un vide est effectué soit avant soit pendant le fibrage grâce à un tube borgne soudé à une extrémité et communiquant par un orifice tubulaire à des moyens de pompage.

De manière connue, l'élément de dopage est introduit lors de différentes étapes de fabrication de chaque préforme de fibre optique monocoeur en quantités déterminées pour conférer au coeur un profil d'indice de réfraction par rapport à l'indice de réfraction propre à la gaine optique de types échelon, anneau, ou encore anneau avec échelon.

Selon l'invention, la concentration de l'élément de dopage dans la zone intérieure peut être soit sensiblement nulle, soit différente de celle du reste du coeur singulier et de celle des autres coeurs, ces derniers étant tous entièrement dopés par l'élément de dopage.

## Revendications

1. Fibre optique multicoeurs comprenant des zones de coeur (1, 2, 3, 4) noyées dans une gaine optique (5) commune et qui contiennent tous un élément de dopage,
**caractérisée en ce que** l'une des zones de coeur dit coeur singulier (3) possède une zone intérieure (9, 9') dont la concentration en élément de dopage est différente de celle du reste (7, 11) dudit coeur singulier (3) et de celle des autres zones de coeur (1, 2, 4), ces dernières formant des coeurs tous entièrement dopés par ledit élément de dopage, le profil d'indice du coeur singulier étant tel que le mode d'extension spatial de la lumière s'y propageant soit du même ordre de grandeur ou égal que le mode d'extension spatial dans les autres coeurs.

2. Fibre selon la revendication 1 **caractérisée en ce que** ladite zone intérieure (9, 9') ne contient sensiblement pas d'élément de dopage.

3. Fibre optique selon l'une des revendications 1 ou 2 dans laquelle ladite zone intérieure (9) est centrale audit coeur singulier (3) et entourée par une zone tubulaire (7) entièrement dopée par ledit élément de dopage.

4. Fibre selon la revendication 3, dans laquelle l'élément de dopage est uniformément réparti dans le coeur singulier (3) et dans chacun des autres coeurs (1, 2, 4) en des quantités différentes qui confèrent respectivement au coeur singulier (3) et aux autres coeurs (1, 2, 4) un profil d'indice de réfraction de type anneau (15) et de type échelon (13) définis de telle façon que la lumière se propage dans les coeurs en ayant sensiblement un même diamètre de mode.

5. Fibre optique selon l'une des revendications 1 ou 2, dans laquelle le coeur singulier (3) comporte une zone centrale (11) entièrement dopée par l'élément de dopage, entourée par ladite zone intérieure (9') ayant une forme tubulaire, elle-même entourée par une zone tubulaire (7) entièrement dopée par ledit élément de dopage.

6. Fibre optique selon la revendication 5, dans laquelle l'élément de dopage est uniformément réparti dans le coeur singulier (3) et dans chacun des autres coeurs (1, 2, 4) en des quantités différentes qui confèrent respectivement au coeur singulier (3) et aux autres coeurs (1, 2, 4) un profil d'indice de réfraction de type anneau avec échelon (17) et de type échelon (13) définis de telle façon que la lumière se propage dans les coeurs en ayant sensiblement un même diamètre de mode.

## Patentansprüche

1. Optische Mehrkernfaser mit Kernzonen (1, 2, 3, 4), die in eine gemeinsame Umhüllung der optischen Faser (5) eingebettet sind, und die alle ein Dotierelement enthalten,
**dadurch gekennzeichnet, dass** eine der Kernzonen, der sogenannte Einzelnem (3), eine Innenzone (9, 9') besitzt, deren Dotierelementkonzentration eine andere ist als die des Restes (7, 11) des Einzelkems (3) und der übrigen Kernzonen (1, 2, 4), wobei die letzteren Kerne bilden, welche allesamt durch das Dotierelement dotiert sind, wobei das Brechzahlprofit des Einzelkerns so beschaffen ist, dass die Art der räumlichen Ausdehnung des Lichts, das sich dort ausbreitet, die gleiche Größenordnung hat oder gleich der Art der räumlichen Ausdehnung in den übrigen Kernen ist.

2. Optische Faser nach Anspruch 1, **dadurch gekennzeichnet, dass** die Innenzone (9, 9') im wesentlichen kein Dotierelement enthält.

3. Optische Faser nach Anspruch 1 oder 2, bei der die Innenzone (9) in der Mitte des Einzelkems (3) liegt und von einer röhrenförmigen Zone (7) umgeben ist, welche gänzlich durch das Dotierelement dotiert ist.

4. Optische Faser nach Anspruch 3, bei der das Dotierelement in unterschiedlichen Mengen in dem Einzelkern (3) und in jedem der übrigen Kerne (1, 2, 4) gleichmäßig verteilt ist, wobei diese Mengen dem Einzelkern (3) bzw. den übrigen Kernen (1, 2, 4) ein ringförmiges (15) und stufenförmiges (13) Brechzahlprofil verleihen, welche so definiert sind, dass sich das Licht in den Fasern ausbreitet, indem es im wesentlichen den gleichen Mode-Durchmesser besitzt.

5. Optische Faser nach Anspruch 1 oder 2, bei der der Einzelkern (3) eine mittlere Zone (11) besitzt, welche-gänzlich durch das Dotierelement dotiert und von der röhrenförmigen Innenzone (9') umgeben ist, die selbst wiederum von einer röhrenförmigen Zone (7) umgeben ist, welche gänzlich durch das Dotierelement dotiert ist.

6. Optische Faser nach Anspruch 5, bei der das Dotierelement in unterschiedlichen Mengen in dem Einzelkern (3) und in jedem der übrigen Kerne (1, 2, 4) gleichmäßig verteilt ist, wobei diese Mengen dem Einzelkern (3) bzw. den übrigen Kernen (1, 2, 4) ein ringförmiges Brechzahlprofil mit Stufe (17) und ein stufenförmiges (13) Brechzahlprofil verleihen, welche so definiert sind, dass sich das Licht in den Fasern ausbreitet, indem es im wesentlichen den gleichen Mode-Durchmesser besitzt.

## Claims

1. Multi-core optical fibre comprising core zones (1, 2, 3, 4) which are embedded in a common optical cladding (5) and all of which comprise a dopant,
**characterised in that** one of the core zones referred to as singular core (3) has an inner zone (9, 9') having a dopant concentration that is different from that of the rest (7, 11) of said singular core (3) and from that of the other core zones (1, 2, 4), the latter forming cores all of which are doped in their entirety by said dopant, the index profile of the singular core being such that the mode of spatial extension of the light propagating therein is of the same order of magnitude as or equal to the mode of spatial extension in the other cores.

2. Fibre according to claim 1, **characterised in that** said inner zone (9, 9') contains substantially no dopant.

3. Optical fibre according to one of claims 1 or 2, wherein said inner zone (9) is central to said singular core (3) and surrounded by a tubular zone (7) doped in its entirety by said dopant.

4. Fibre according to claim 3, wherein the dopant is uniformly distributed within the singular core (3) and within each of the other cores (1, 2, 4) in different amounts which provide the singular core (3) and the other cores (1, 2, 4) with refractive index profiles of, respectively, a ring type (15) and a step type (13), which are defined in such a manner that the light propagates in the cores with substantially one and the same mode diameter.

5. Optical fibre according to one of claims 1 or 2, wherein the singular core (3) comprises a central zone (11) doped in its entirety by the dopant and surrounded by said inner zone (9'), the latter being of tubular shape and being itself surrounded by a tubular zone (7) doped in its entirety by said dopant.

6. Optical fibre according to claim 5, wherein the dopant is uniformly distributed within the singular core (3) and within each of the other cores (1, 2, 4) in different amounts which provide the singular core (3) and the other cores (1, 2, 4) with refractive index profiles of, respectively, a ring-with-step type (17) and a step type (13), which are defined in such a manner that the light propagates in the cores with substantially one and the same mode diameter.
